# EUROPEAN PATENT SPECIFICATION

(11) **EP 3 643 532 B1**
(45) Date of publication and mention of the grant of the patent: **19.04.2023**
(21) Application number: 18819839.4
(22) Date of filing: 22.05.2018
(51) Int. Cl.: B60C 15/04, B60C 15/06

(54) **BEAD MEMBER AND PNEUMATIC TIRE**
WULSTGLIED UND LUFTREIFEN
ÉLÉMENT DE TALON ET PNEUMATIQUE

(30) Priority: 19.06.2017 JP 2017119979
(43) Date of publication of application: 29.04.2020
(73) Proprietor: Bridgestone Corporation, Tokyo 104-8340 (JP)
(72) Inventor: HASEGAWA Keiichi, Tokyo 104-8340 (JP)
(74) Representative: Marks & Clerk LLP
(86) International application number: PCT/JP2018/019711
(87) International publication number: WO 2018/235502

(56) References cited:
- EP-A1- 3 643 534
- JP-A- H1 076 820
- JP-A- H11 198 617
- JP-A- 2000 108 616
- JP-A- 2007 290 443
- JP-A- 2008 302 878
- JP-A- 2010 162 826
- JP-A- 2013 063 743
- JP-A- 2013 063 743
- JP-A- 2015 101 228
- JP-A- 2015 101 228
- JP-A- 2015 123 905
- JP-A- 2017 071 326

## Description

### TECHNICAL FIELD

The present invention relates to a bead member for a pneumatic tire.

### BACKGROUND

Heretofore, a bead filler has been known in which a hard rubber is used. On the other hand, in Patent Literature 1, a bead filler made of a thermoplastic resin is disclosed.

### CITATION LIST

### Patent Literature

PTL 1: Japanese Patent Laid-Open No. 2-151510. Attention is also drawn to the disclosures of EP3 643 534, JP 2013 063743 and JP2015 101228.

### SUMMARY

### (Technical Problem)

In a bead filler made of a resin as described in Patent Literature 1, a strength of a bead portion can heighten, and a steering stability can heighten as in a bead filler made of a rubber. On the other hand, the bead filler has a larger rigidity and is harder to be noticeably deformed as compared with the bead filler having the same size and shape and made of the rubber. Consequently, there is concern that a ride comfort performance worsens in accordance with a vehicle type or a vehicle use application. It is considered that a thickness of the bead filler made of the resin is decreased to improve a ride comfort performance, but there is concern that the steering stability lowers.

To solve the problem, it is an object of the present invention to provide a bead member having a portion made of a resin in a bead filler and being capable of achieving compatibility of a steering stability and a ride comfort performance, and a pneumatic tire including the same.

### (Solution to Problem)

A bead member according to a first aspect of the present invention is as claimed in claim 1.

A pneumatic tire according to a second aspect of the present invention is as claimed in claim 10.

### (Advantageous Effect)

According to the present invention, there can be provided a bead member having a portion made of a resin in a bead filler and being capable of achieving compatibility of a steering stability and a ride comfort performance, and a pneumatic tire including the same.

### BRIEF DESCRIPTION OF THE DRAWINGS

In the accompanying drawings:
FIG. 1 is a partially cross-sectional view illustrating a part of a cross section of a pneumatic tire along a tire axial direction comprising a bead member according to a first embodiment not comprised by the present invention;
FIG. 2 is an enlarged view of a vicinity of a bead portion illustrated in FIG. 1, not comprised by the present invention;
FIG. 3 is a cross-sectional view illustrating the bead member according to the first embodiment and not comprised by the present invention;
FIG. 4 is a cross-sectional view illustrating a bead member according to a second embodiment of the present invention;
FIG. 5 is a cross-sectional view illustrating a bead member according to a third embodiment of the present invention;
FIG. 6 is a cross-sectional view illustrating a bead member according to a fourth embodiment of the present invention;
FIG. 7 is a cross-sectional view illustrating a bead member according to a fifth embodiment of the present invention;
FIG. 8 is a cross-sectional view illustrating a bead member according to a sixth embodiment of the present invention; and
FIG. 9 is a cross-sectional view illustrating a bead member according to a seventh embodiment of the present invention.

### DETAILED DESCRIPTION

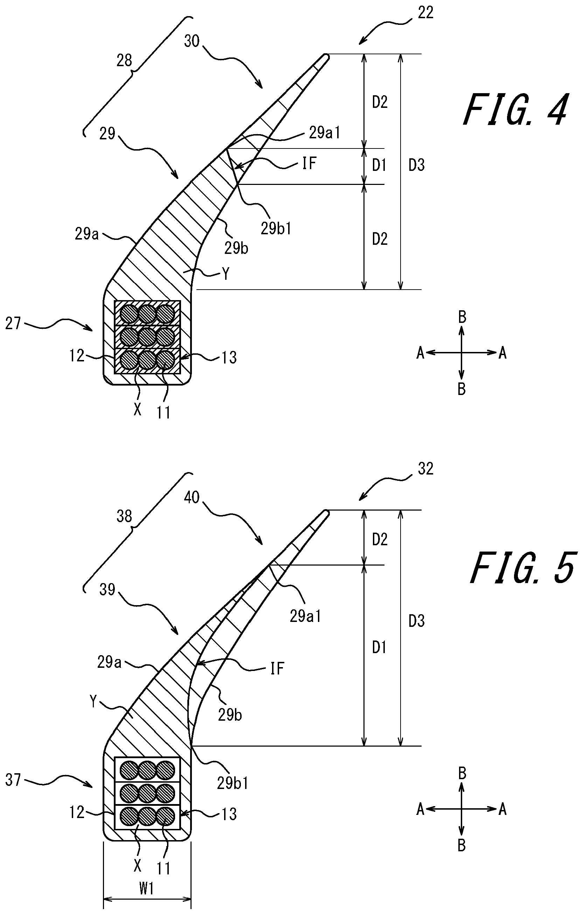

Hereinafter, embodiments of a bead member and a pneumatic tire according to the present invention will be illustrated and described with reference to FIG. 4 to FIG. 9. Members and regions that are common through respective drawings are denoted with the same reference signs.

Hereinafter, unless otherwise mentioned, dimensions, length relations, positional relations and the like of respective elements will be measured in a reference state where the pneumatic tire is attached to a rim and charged with a predetermined internal pressure and no load.

Here, the "rim" indicates an approved rim in an applicable size (a measuring rim in Standards Manual of ETRTO (the European Tyre and Rim Technical Organisation), and a design rim in Year Book of TRA (the Tire and Rim Association, Inc.)) described or to be described in future in an industrial standard effective in a district where the pneumatic tire is produced and used, for example, JATMA Year Book of JATMA (the Japan Automobile Tyre Manufacturers Association) in Japan, Standards Manual of ETRTO in Europe, Year Book of TRA in U.S or the like (that is, the above "rim" also includes a size that can be included in the above industrial standard in future, in addition to the existing size. Examples of "the size to be described in future" include sizes described as "future developments" in 2013 edition of Standards Manual of ETRTO). However, it is considered that a rim having a size that is not described in the above industrial standard is a rim having a width corresponding to a bead width of the pneumatic tire.

Additionally, "the predetermined internal pressure" indicates an air pressure (a maximum air pressure) corresponding to a maximum load capability of a single wheel in an applicable size and ply rating described in the above JATMA Year Book or the like. It is considered that a pressure having a size that is not described in the above industrial standard is an air pressure (the maximum air pressure) corresponding to the maximum load capability prescribed for each vehicle to which the tire is installed.

### ≺ First Embodiment Not Comprised by the Present Invention ≻

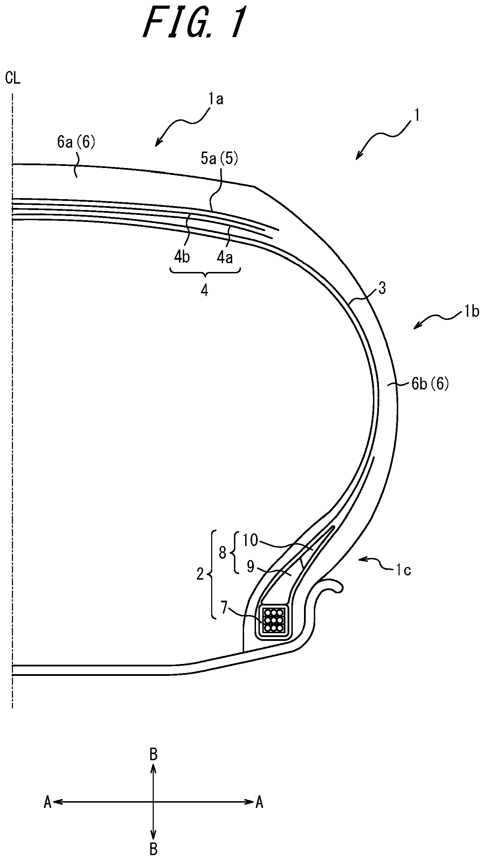

FIG. 1 is a cross-sectional view in a cross section (hereinafter referred to as "the tire axial cross section") along a tire axial direction A which includes a tire rotation axis of a pneumatic tire 1 (hereinafter referred to as "the tire 1"). FIG. 1 only illustrates a half portion on one side in the tire axial direction A with a tire equatorial plane CL as a boundary, and omits depiction of a half portion on the other side, and the other half portion also has a similar configuration. Furthermore, FIG. 1 illustrates the tire 1 in the above described reference state.

As illustrated in FIG. 1, the tire 1 comprises a pair of bead members 2, a carcass 3, a belt 4, a band 5, and a coating rubber 6. In the tire 1 of the present embodiment, a tread portion 1a, a pair of sidewall portions 1b arranged on opposite sides of the tread portion 1a and a bead portion 1c disposed continuously with each sidewall portion 1b comprise the pair of annular bead members 2, the carcass 3, the belt 4, the band 5 and the coating rubber 6 described above.

### [Bead Member 2]

The bead member 2 is embedded in the bead portion 1c, and comprises an annular bead core 7, and a bead filler 8 located on an outer side of the bead core 7 in a radial direction (the same direction as a tire radial direction B in FIG. 1) of the bead core 7. Hereinafter, for convenience of description, the radial direction of the bead core 7 and the tire radial direction B of the tire 1 will be described simply as "the radial direction B". Furthermore, hereinafter, for the convenience of the description, an axial direction of the bead core 7 and the tire axial direction A of the tire 1 will be described simply as "the axial direction A". Additionally, hereinafter, for the convenience of the description, a circumferential direction of the bead core 7 and a tire circumferential direction of the tire 1 will be described simply as "the circumferential direction".

The bead filler 8 comprises a resin filler portion 9 made of a resin, and a rubber filler portion 10 made of a rubber and joined to the resin filler portion 9. Thus, the bead filler 8 is configured, so that the rubber filler portion 10 can inhibit a ride comfort performance from lowering while the resin filler portion 9 heightens a steering stability. That is, there can be achieved the bead member 2 having the steering stability and the ride comfort performance that are compatible.

As a resin material that forms the resin filler portion 9, a thermoplastic elastomer, a thermoplastic resin, a resin that crosslinks by heat or an electron beam or a resin that cures by thermal dislocation can be used, but it is preferable to use the thermoplastic elastomer. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin material, a resin material can be used in which, for example, a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the resin material of the resin filler portion 9 has a tensile elastic modulus (prescribed in JIS K7113: 1995) of 50 MPa or more. Furthermore, it is preferable that the tensile elastic modulus of the resin material of the resin filler portion 9 has an upper limit of 1000 MPa or less. Note that the resin material of the resin filler portion 9 mentioned herein does not contain a rubber (an organic polymer material that exhibits a rubber elasticity at normal temperature).

### [Carcass 3]

The carcass 3 straddles across a pair of bead portions 1c, more specifically across the bead cores 7 of the pair of bead members 2, and toroidally extends. Additionally, the carcass 3 has at least a radial structure.

Furthermore, the carcass 3 comprises one or more (one in the present embodiment) carcass plies formed by arranging a carcass cord at an angle of, for example, 75° to 90° to the circumferential direction (a direction orthogonal to a paper surface in FIG. 1). This carcass ply comprises a ply main body located between a pair of bead cores 7, and a ply turn-up portion turned up from an inner side to an outer side in a tire width direction (the same direction as the axial direction A) about the bead core 7 at each of opposite ends of the ply main body. Additionally, the bead filler 8 extending in a tapered manner to the outer side in the radial direction B is disposed between the ply main body and the turned-up portion. As the carcass cord, a polyester cord is adopted in the present embodiment. Besides this cord, an organic fiber cord made of nylon, rayon, aramid or the like may be adopted, or if necessary, a steel cord may be adopted. Furthermore, the number of the carcass plies may be two or more.

### [Belt 4]

The belt 4 comprises one or more layers (two layers in an example illustrated in FIG. 1) of belt layers arranged on an outer side of a crown portion of the carcass 3 in the radial direction B. The belt 4 of the present embodiment comprises a first belt layer 4a laminated on an outer surface of the carcass 3 in the radial direction B, and a second belt layer 4b laminated on an outside of the first belt layer 4a in the radial direction B. Each of the first belt layer 4a and the second belt layer 4b is formed of a belt ply formed by disposing a belt cord that is the steel cord in an inclined manner at an angle of 10° to 40° to the circumferential direction. These two belt plies are superimposed with inclination directions of the belt cords being different from each other. Consequently, the belt cords of the belt plies intersect each other, to heighten a belt rigidity, and an almost entire width of the tread portion 1a is reinforced with a hoop effect. In the present embodiment, the first belt layer 4a located on the inner side in the radial direction B is formed to be wider than the second belt layer 4b located on the outer side in the radial direction B. Consequently, in the present embodiment, the first belt layer 4a located on the inner side in the radial direction B extends in the tire width direction to the outer side of the second belt layer 4b located on the outer side in the radial direction B.

However, the second belt layer 4b located on the outer side in the radial direction B may be formed to be wider than the first belt layer 4a located on the inner side in the radial direction B. That is, the second belt layer 4b located on the outer side in the radial direction B may be configured to extend in the tire width direction to the outer side of the first belt layer 4a located on the inner side in the radial direction B. Furthermore, the belt 4 of the present embodiment comprises two belt layers, but may comprise only one belt layer or three or more belt layers.

### [Band 5]

The band 5 comprises one or more layers (one layer in the example illustrated in FIG. 1) of band layers disposed on an outer side of the belt 4 in the radial direction B. The band 5 of the present embodiment comprises a single band layer 5a laminated on an outer surface of the second belt layer 4b of the belt 4 in the radial direction B. The band layer 5a covers an entire region of the belt 4 in the axial direction A at a position on the outer side of the belt 4 in the radial direction B. The band layer 5a comprises a band ply formed by spirally winding a nylon cord that is a band cord of organic fibers at an angle of 10° or less, preferably 5° or less to the circumferential direction. Note that the band 5 may comprise a plurality of band layers laminated in the radial direction B, or the band 5 is not provided as required.

### [Coating Rubber 6]

The coating rubber 6 comprises a tread rubber 6a and a side rubber 6b. The tread rubber 6a is disposed on an outer side of the band 5 in the radial direction B. Although not illustrated, a tread pattern is formed with a groove or the like extending in the axial direction A or the circumferential direction on an outer surface of the tread rubber 6a in the radial direction B. The side rubber 6b is formed integrally with the tread rubber 6a, and covers an outside of the carcass 3 in the tire width direction. Note that "the tread rubber 6a" means a rubber of a portion that comes in contact with a road surface.

Note that an inner liner is disposed as an air impervious layer on an inner surface of the tire 1 illustrated in FIG. 1. As a material of the inner liner, for example, a butyl-based rubber can be used.

### [Bead Core 7 and Bead Filler 8]

Hereinafter, description will be made as to further details and characteristics parts of the bead core 7 and the bead filler 8 of the bead member 2.

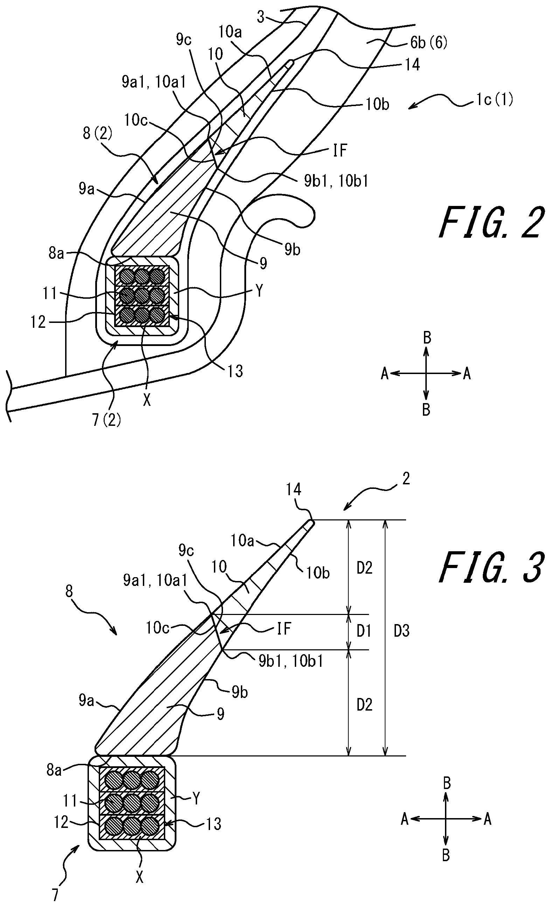

FIG. 2 is an enlarged view of the bead portion 1c of the tire 1 illustrated in FIG. 1 not comprised by the present invention. Furthermore, FIG. 3 not comprised by the present invention is a cross-sectional view of a single unit of the bead member 2 in a cross section parallel to the axial direction A including a central axis of the bead core 7. Hereinafter, for the convenience of the description, the cross section illustrated in FIG. 3 will be referred to as "the bead core axial cross section".

As illustrated in FIG. 2 and FIG. 3, the bead core 7 of the present embodiment comprises an annular body 13 in a state where a strip member 12 formed by coating one or more (three in an example illustrated in FIG. 2 and FIG. 3) bead wires 11 with a wire coating resin X is wound a plurality of times and laminated. The strip member 12 of the present embodiment has a band shape.

The strip member 12 of the present embodiment can be formed by coating an outer peripheral side of the bead wires 11 with the molten wire coating resin X, followed by cooling and solidifying. The strip member 12 of the present embodiment has a rectangular cross section outer shape in a cross section orthogonal to an extending direction of the member.
Specifically, the strip member 12 having the band shape in the present embodiment has a cross section outer shape of a rectangle comprising long sides extending in the axial direction A and short sides extending in the radial direction B in tire axial cross-sectional view (see FIG. 1 and FIG. 2). In the strip member 12 of the present embodiment not comprised by the present invention, three bead wires 11 linearly arranged via a space in the axial direction A are coated with the wire coating resin X, and the above described cross section outer shape of the rectangle is formed by the wire coating resin X that coats a circumference of the bead wire 11.

The annular body 13 of the present embodiment can be formed by winding the strip member 12 while laminating the strip member in the radial direction B. In the annular body 13 of the present embodiment, the strip member 12 is laminated in at least three stacks in the radial direction B at an arbitrary position in the circumferential direction. The stacks are joined to each other, for example, by winding the strip member 12 while melting the wire coating resin X by hot plate welding or the like, and solidifying the molten wire coating resin X. Alternatively, the stacks can be joined to each other by bonding with an adhesive or the like.

Note that the strip member 12 of the present embodiment has the cross section outer shape of the rectangle having the long sides extending in the axial direction A in tire axial cross-sectional view (see FIG. 1 and FIG. 2), but the strip member is not limited to this cross section outer shape. For example, in the same cross-sectional view, the member may be configured to have another cross section outer shape that is easily laminated, such as a cross section outer shape of a rectangle having long sides extending in the radial direction B, a cross section outer shape of a square, or a cross section outer shape of a parallelogram. The cross-sectional shape of the strip member 12 can be formed in a desired shape using, for example, an extruder. Furthermore, the number or arrangement of the bead wires 11 to be embedded in the strip member 12 is not limited to the configuration of the present embodiment, and can be appropriately designed. Furthermore, the annular body 13 of the present embodiment is configured in a state where the strip member 12 is laminated in the radial direction B, but may be an annular body configured in a state where the strip member is laminated in the axial direction A, or may be an annular body configured in a state where the strip member is laminated in both the radial direction B and the axial direction A. Thus, according to a laminating method of laminating the strip member in at least one of the radial direction B and the axial direction A, a laminated configuration of the strip member 12 can be easily achieved.

The bead wire 11 of the present embodiment is formed of the steel cord. The steel cord can comprise, for example, a steel monofilament or a stranded wire. Note that as the bead wire 11, organic fibers, carbon fibers or the like may be used.

As the resin material of the wire coating resin X of the present embodiment, the above described resin material exemplified as the resin material of the resin filler portion 9 can be utilized.

As described above, the bead wire 11 is coated with the wire coating resin X, so that a positional relation among a plurality of bead wires 11 in tire axial cross-sectional view (see FIG. 1 and FIG. 2) is hard to vary as compared with a configuration where the bead wire is coated with a rubber. Consequently, a cross-sectional shape of the bead core 7 can be further stabilized even during tire deformation or the like. Therefore, the bead core 7 having a high durability can be achieved.

Furthermore, a circumference of the annular body 13 of the present embodiment is coated with a core coating resin Y. As a resin material of the core coating resin Y, the above described resin material exemplified as the resin material of the resin filler portion 9 can be utilized. Thus, the coating of the annular body 13 with the core coating resin Y can further heighten stability of the above described cross-sectional shape of the bead core 7, and can further improve the durability of the bead core 7.

The core coating resin Y and the above described wire coating resin X may be the same resin material, or may be different resin materials. However, from a viewpoint of more simply obtaining the bead core 7 having the high durability, it is preferable that the core coating resin Y is the same resin as the wire coating resin X. The reason is that the core coating resin Y and the wire coating resin X can be easily welded or bonded. Furthermore, from a viewpoint of easily adjusting a hardness of the bead core 7, it is preferable that the core coating resin Y is the resin different from the wire coating resin X. Here, in general, the resin has a larger hardness than the rubber. Consequently, to decrease a difference in rigidity between the bead core 7 and the surrounding rubber, it is preferable that the core coating resin Y directly adjacent to the rubber has a smaller hardness than the wire coating resin X (a hardness close to that of the rubber). On the other hand, to further obtain an effect of thermal contraction, it is preferable that the core coating resin Y has a larger hardness than the wire coating resin X.

Furthermore, as the core coating resin Y, it is preferable to use a resin having a high adhesiveness to the rubber.

Thus, the bead core 7 of the present embodiment comprises the core coating resin Y. Furthermore, the bead core 7 of the present embodiment is formed in a rectangular outer shape with the core coating resin Y in bead core axial cross-sectional view (see FIG. 3). More specifically, the outer shape of the bead core 7 in the same cross-sectional view of the present embodiment is a rectangle comprising short sides located on an inner side and an outer side in the radial direction B and extending in the axial direction A and long sides located on opposite sides in the axial direction A and extending in the radial direction B.

The bead filler 8 of the present embodiment has a tapered shape with a width in the axial direction A gradually decreasing as being away from the inner side toward the outer side in the radial direction B. More specifically, the bead filler 8 of the present embodiment has the tapered shape with the width in the axial direction A monotonously decreasing as being away from the inner side toward the outer side in the radial direction B. Note that "the width in the axial direction A gradually decreases as being away from the inner side toward the outer side in the radial direction B" means that the width in the axial direction A may gradually decrease as being toward the outer side in the radial direction B without increasing, and this configuration includes stepwise decrease. On the other hand, "the width in the axial direction A monotonously decreases as being away from the inner side toward the outer side in the radial direction B" means a configuration where the width in the axial direction A decreases continuously as being away toward the outer side in the radial direction B. That is, "monotonous decrease" is a condition of "gradual decrease".

Furthermore, the bead filler 8 is inclined to extend in the axial direction A to one side (in the tire width direction to the outer side in the present embodiment) as being toward the outer side in the radial direction B. Additionally, an inner peripheral end face of the bead filler 8 on the inner side in the radial direction B is joined to the bead core 7. That is, the inner peripheral end face of the bead filler 8 on the inner side in the radial direction B forms a core joining surface 8a to the bead core 7. The inner peripheral end face of the bead filler 8 as the core joining surface 8a linearly extends in the axial direction A in the bead core axial cross-sectional view, and this inner peripheral end face as the core joining surface 8a is joined to the short side of the bead core 7 on the outer side in the radial direction B, the short side extending in the axial direction A in the same cross-sectional view.

As described above, the bead filler 8 comprises the resin filler portion 9 and the rubber filler portion 10, and the resin filler portion 9 has the inner peripheral end face as the core joining surface 8a described above. Then, the resin filler portion 9 is joined to the bead core 7 by welding or bonding the inner peripheral end face as the core joining surface 8a to the core coating resin Y of the bead core 7 on the outer side of the bead core 7 in the radial direction B. The resin filler portion 9 and the core coating resin Y of the bead core 7 may be the same resin material, or different resin materials. However, as described later, from viewpoints of omitting a joining step and improving a strength, it is preferable that the resin filler portion 9 and the core coating resin Y of the bead core 7 are made of the same resin material (see FIG. 4).

A width of the resin filler portion 9 in the axial direction A according to the present embodiment gradually decreases, more specifically monotonously decreases as being away from the inner side toward the outer side in the radial direction B. That is, the resin filler portion 9 of the present embodiment has a tapered shape that decreases in thickness as being toward the outer side in the radial direction B. Thus, the width of the resin filler portion 9 gradually decreases, so that a rigidity of the bead filler 8 is moderately and easily adjusted. Furthermore, the resin filler portion 9 of the present embodiment comprises a first curved surface 9a on one side (a left side in FIG. 3) in the axial direction A which is the inner side in the tire width direction. Additionally, the resin filler portion 9 of the present embodiment comprises a second curved surface 9b on the other side (a right side in FIG. 3) in the axial direction A which is the outer side in the tire width direction. In addition, the resin filler portion 9 of the present embodiment has a joining surface 9c, at an outer position in the radial direction B, which connects an outer end 9a1 of the first curved surface 9a in the radial direction B and an outer end 9b1 of the second curved surface 9b in the radial direction B and which is joined to the rubber filler portion 10.

The first curved surface 9a is inclined to extend in the tire width direction to the outer side as being away from the inner side toward the outer side in the radial direction B. Furthermore, the second curved surface 9b is also inclined to extend in the tire width direction to the outer side as being away from the inner side toward the outer side in the radial direction B. Additionally, a width between the first curved surface 9a and the second curved surface 9b in the axial direction A gradually decreases, more specifically monotonously decreases as being away from the inner side toward the outer side in the radial direction B.

Furthermore, the outer end 9a1 that is an end of an outside of the first curved surface 9a in the radial direction B is located further on an outer side of the outer end 9b1 in the radial direction B which is an end of an outside of the second curved surface 9b in the radial direction B. In other words, the first curved surface 9a extends in the radial direction B to the outer side of the second curved surface 9b. Therefore, the joining surface 9c extends in a direction that intersects the axial direction A in the bead core axial cross-sectional view (see FIG. 3 or the like). Furthermore, as described above, the first curved surface 9a and the second curved surface 9b are inclined to extend in the tire width direction to the outer side as being away from the inner side toward the outer side in the radial direction B, and hence, the joining surface 9c is formed at a position on the outer side of the bead core 7 in the tire width direction.

Note that the width of the resin filler portion 9 in the axial direction A gradually decreases, more specifically monotonously decreases also at a position of the joining surface 9c as being away from the inner side toward the outer side in the radial direction B. Specifically, the width of the resin filler portion 9 in the axial direction A at the position of the joining surface 9c is defined by the first curved surface 9a and the joining surface 9c, and the width between the first curved surface 9a and the joining surface 9c in the axial direction A monotonously decreases as being away from the inner side toward the outer side in the radial direction B.

The rubber filler portion 10 of the present embodiment comprises a first side surface 10a on one side (the left side in FIG. 3) in the axial direction A which is the inner side in the tire width direction. Furthermore, the rubber filler portion 10 of the present embodiment comprises a second side surface 10b on the other side (the right side in FIG. 3) in the axial direction A which is the outer side in the tire width direction. Furthermore, the rubber filler portion 10 of the present embodiment comprises, at an inner position in the radial direction B, an opposite joining surface 10c connecting an inner end 10a1 of the first side surface 10a in the radial direction B and an inner end 10b1 of the second side surface 10b in the radial direction B and to be joined to the joining surface 9c of the resin filler portion 9.

The first side surface 10a is inclined to extend in the tire width direction to the outer side as being away from the inner side toward the outer side in the radial direction B. Furthermore, the second side surface 10b is also inclined to extend in the tire width direction to the outer side as being away from the inner side toward the outer side in the radial direction B. Additionally, a width between the first side surface 10a and the second side surface 10b in the axial direction A gradually decreases, more specifically monotonously decreases as being away from the inner side toward the outer side in the radial direction B, and a roof portion 14 that is continuous in the circumferential direction as an outer end of the radial direction B is formed by a ridgeline at which the first side surface 10a and the second side surface 10b intersect. As illustrated in FIG. 2, the roof portion 14 is located on an outer side of the bead core 7 in the tire width direction.

The first side surface 10a of the present embodiment is almost flush and continuous with the first curved surface 9a of the resin filler portion 9. Consequently, the outer end 9a1 of the first curved surface 9a of the resin filler portion 9 is not exposed as a corner portion, so that damage to the carcass 3 caused by the outer end 9a1 or the like can be inhibited. Furthermore, the second side surface 10b of the present embodiment is also almost flush and continuous with the second curved surface 9b of the resin filler portion 9. Consequently, the outer end 9b1 of the second curved surface 9b of the resin filler portion 9 is not exposed as a corner portion, so that damage to the carcass 3 caused by the outer end 9b1 or the like can be inhibited.

Note that a width of the rubber filler portion 10 in the axial direction A at a position of the opposite joining surface 10c gradually increases as being away from the inner side toward the outer side in the radial direction B. Specifically, the width of the rubber filler portion 10 in the axial direction A at the position of the opposite joining surface 10c is defined by the second side surface 10b and the opposite joining surface 10c, and a width between the second side surface 10b and the opposite joining surface 10c in the axial direction A gradually increases as being away from the inner side toward the outer side in the radial direction B.

As described above, the joining surface 9c of the resin filler portion 9 extends in a direction that intersects the axial direction A in the bead core axial cross-sectional view (see FIG. 3 or the like), and the opposite joining surface 10c of the rubber filler portion 10 is bonded to the joining surface 9c of the resin filler portion 9 with an adhesive or by vulcanization. That is, a joining interface IF between the joining surface 9c of the resin filler portion 9 and the opposite joining surface 10c of the rubber filler portion 10 also extends in the direction that intersects the axial direction A.

Here, the bead filler 8 of the present embodiment has an overlapping region D1 and a non-overlapping region D2 in the radial direction B.

The overlapping region D1 in the radial direction B is a region where the resin filler portion 9 and the rubber filler portion 10 overlap in the axial direction A. As described above, the joining interface IF of the present embodiment extends in the direction that intersects the axial direction A. Consequently, a region where the joining interface IF is located in the radial direction B is a region where the resin filler portion 9 and the rubber filler portion 10 overlap in the axial direction A, that is, the overlapping region D1. Conversely, the non-overlapping region D2 in the radial direction B is a region where the resin filler portion 9 and the rubber filler portion 10 do not overlap in the axial direction A. Specifically, in the bead filler 8 of the present embodiment, a region other than the overlapping region D1 described above is the non-overlapping region D2. That is, in the bead filler 8 of the present embodiment, a region only comprising the rubber filler portion 10 on an outer side of the overlapping region D1 in the radial direction B and a region only comprising the resin filler portion 9 on an inner side of the overlapping region D1 in the radial direction B are non-overlapping regions D2. Furthermore, an entire region D3 of the bead filler 8 in the radial direction B comprises the overlapping region D1 and the non-overlapping regions D2.

According to a configuration where the bead filler 8 comprises the overlapping region D1, a difference in level of rigidity between a joining region of the resin filler portion 9 to the rubber filler portion 10 and a position in a vicinity of the region in the radial direction B can be decreased as in a configuration where the overlapping region D1 is not present.

Furthermore, in the overlapping region D1, the resin filler portion 9 is exposed on one side (the left side in FIG. 3) in the axial direction A which is the inner side in the tire width direction, and the rubber filler portion 10 is exposed on the other side (the right side in FIG. 3) in the axial direction A which is the outer side in the tire width direction. According to this arrangement, deformation by the resin filler portion 9 is inhibited against a load that acts outwardly from the inner side in the tire width direction. On the other hand, deformation by the rubber filler portion 10 easily occurs under a load that acts inwardly from the outer side in the tire width direction. That is, while stably retaining an inner surface of the bead filler 8 in the tire width direction in a predetermined shape, an outer surface of the bead filler 8 in the tire width direction can be deformed in accordance with an external force. Therefore, the outer surface of the bead filler in the tire width direction can be deformed in a desired shape by following a shape of a member (the turn-up portion of the carcass 3 in FIG. 1 and FIG. 2) adjacent to the outer side of the bead filler 8 in the tire width direction or a shape of a pressing member of a molding device which presses the adjacent member against the bead filler 8 during tire molding in which a bladder is used. On the other hand, during the tire molding in which the bladder is used, the inner surface of the bead filler 8 in the tire width direction, which is not desired to be deformed, can be inhibited from being deformed and retained in the desired shape.

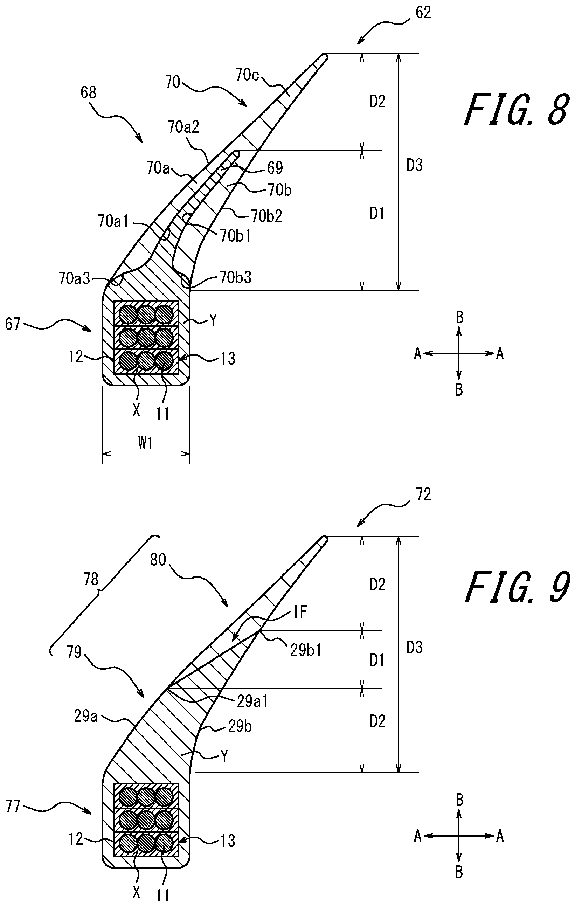

Note that in the overlapping region D1 of the bead filler 8 of the present embodiment, the resin filler portion 9 is exposed on the inner side in the tire width direction, and the rubber filler portion 10 is exposed on the outer side in the tire width direction. However, a region to be deformed may vary in accordance with a purpose. Therefore, the bead filler may be, for example, a bead filler in which in the overlapping region D1, the resin filler portion 9 is exposed on the outer side in the tire width direction, and the rubber filler portion 10 is exposed on the inner side in the tire width direction. That is, the region to be deformed can be adjusted so that a desired position is deformed. However, as described above, in consideration of the tire molding in which the bladder is used, a configuration is preferable where in the overlapping region D1, the resin filler portion 9 is exposed on the inner side in the tire width direction, and the rubber filler portion 10 is exposed on the outer side in the tire width direction as in the present embodiment. Furthermore, as described later, in consideration of a joining durability of an adhesive or the like to the joining interface IF, a configuration is preferable where in the overlapping region D1, the resin filler portion is exposed on the outer side in the tire width direction, and the rubber filler portion is exposed on the inner side in the tire width direction (see FIG. 9).

Note that in the present embodiment, an outer end (the same as the outer end 9a1 of the first curved surface 9a in the present embodiment) that is an end of an outside of the joining interface IF in the radial direction B is located on one side (the left side in FIG. 3) in the axial direction A which is a tire widthwise inner side of an inner end (the same as the outer end 9b1 of the second curved surface 9b in the present embodiment) that is an end of an inside of the joining interface IF in the radial direction B. However, as described later, a configuration is more preferable where the outer end that is the end of the outside of the joining interface IF in the radial direction B is located on the other side (the right side in FIG. 3) in the axial direction A which is a tire widthwise outer side of the inner end that is the end of the inside of the joining interface IF in the radial direction B (see FIG. 5). According to this configuration, the overlapping region D1 is easily acquired in a wider range in the radial direction B.

### <Second Embodiment>

Next, description will be made as to a bead member 22 as another embodiment of the bead member 2 described above with reference to FIG. 4. FIG. 4 illustrates a bead core axial cross section of the bead member 22.

The bead member 22 illustrated in FIG. 4 comprises a bead core 27 and a bead filler 28. The bead filler 28 comprises a resin filler portion 29 and a rubber filler portion 30. In the above described bead member 2 illustrated in FIG. 1 to FIG. 3, the bead core 7 and the bead filler 8 that are separate bodies are joined by welding or bonding, but in the bead member 22 illustrated in FIG. 4, the bead core 27 is formed integrally with a part of the bead filler 28. Another configuration of the bead member 22 is the same as the above described configuration of the bead member 2 illustrated in FIG. 1 to FIG. 3, and hence, description is omitted here.

The bead core 27 of the bead member 22 illustrated in FIG. 4 is coated with a core coating resin Y in the same manner as in the bead core 7 of the bead member 2 described above. Furthermore, in the present embodiment, the resin filler portion 29 of the bead filler 28 is formed integrally with the core coating resin Y that coats the bead core 27. Such a configuration can omit a joining step of the bead core 27 and the bead filler 28, and simplify manufacturing of the bead member 22. Furthermore, it is possible to increase a strength of the bead member 22 and to heighten a durability of the bead member 22. Consequently, in a state where a tire including the bead member 22 is attached to a rim, the carcass 3 can be further inhibited from being pulled off.

Note that as a method of integrally forming the resin filler portion 29 and a coated portion of the bead core 27 using the core coating resin Y, for example, injection molding can be utilized, but the present invention is not limited to this method. The integral forming can be achieved by various methods.

### <Third Embodiment>

Next, description will be made as to a bead member 32 as still another embodiment with reference to FIG. 5. FIG. 5 illustrates a bead core axial cross section of the bead member 32.

The bead member 32 illustrated in FIG. 5 comprises a bead core 37 and a bead filler 38. The bead filler 38 comprises a resin filler portion 39 and a rubber filler portion 40. The bead member 32 of the present embodiment is different in configuration of a joining interface IF from the bead member 22 described above and illustrated in FIG. 4, but another configuration is the same as the configuration of the bead member 22 illustrated in FIG. 4. Consequently, the above difference is mainly described here, and description of a common configuration is omitted.

As illustrated in FIG. 5, the joining interface IF between the resin filler portion 39 and the rubber filler portion 40 has a longer region in a radial direction B than the joining interface IF illustrated in FIG. 4. In other words, an overlapping region D1 of the present embodiment is acquired longer in the radial direction B than the overlapping region D1 of the bead member 22 illustrated in FIG. 4. Consequently, the joining interface IF can expand and have a heightened joining strength. Furthermore, a difference in level of a rigidity between the resin filler portion 39 and the rubber filler portion 40 can be further decreased as compared with the configuration illustrated in FIG. 4.

In other words, an outer end (the same as an outer end 29a1 of a first curved surface 29a in the present embodiment) that is an end of an outside of the joining interface IF in the radial direction B is located on one side (a right side in FIG. 5) in an axial direction A which is a tire widthwise outer side of an inner end (the same as an outer end 29b1 of a second curved surface 29b in the present embodiment) that is an end of an inside of the joining interface IF in the radial direction B. Consequently, the overlapping region D1 is easily acquired in a wider range in the radial direction B. Furthermore, according to this configuration, a change ratio of a width of the resin filler portion 39 in the axial direction A can be decreased in the overlapping region D1. In the overlapping region D1, the width of the resin filler portion 39 in the axial direction A gradually decreases as being away from an inner side toward an outer side in the radial direction B, but the overlapping region D1 can be acquired longer in the radial direction B. Consequently, it is possible to further decrease the change ratio of the gradually decreasing width. This also applies to a change ratio of a width of the rubber filler portion 40 in the axial direction A. Therefore, a change ratio of the rigidity that changes along the radial direction B can be moderated. That is, a difference in level of rigidity between a joining region of the resin filler portion 39 to the rubber filler portion 40 and a vicinity of the region can be further decreased.

Furthermore, in the present embodiment, as illustrated in FIG. 5, the overlapping region D1 is longer than a non-overlapping region D2 in an entire region D3 of the bead filler 38 in the radial direction B. In other words, the length of the overlapping region D1 is larger than 1/2 of the entire region D3 of the bead filler 38 in the radial direction B. Consequently, the above described increase of the joining strength and the decrease of the difference in level of rigidity can be easily achieved.

Additionally, in the present embodiment, as illustrated in FIG. 5, a length of the joining interface IF in the radial direction B (the length of the overlapping region D1) is larger than a maximum width W1 of the bead core 37 in the axial direction A. Consequently, the above described increase of the joining strength and the decrease of the difference in level of rigidity can be easily achieved.

Note that the overlapping region D1 of the present embodiment is formed of an inner end of the bead filler 38 in the radial direction B. Therefore, the non-overlapping region D2 of the present embodiment is a region on an outer side, in the radial direction B, of an outer end (the same as the outer end 29a1 of the first curved surface 29a in the present embodiment) of the resin filler portion 39 in the radial direction B.

### <Fourth Embodiment>

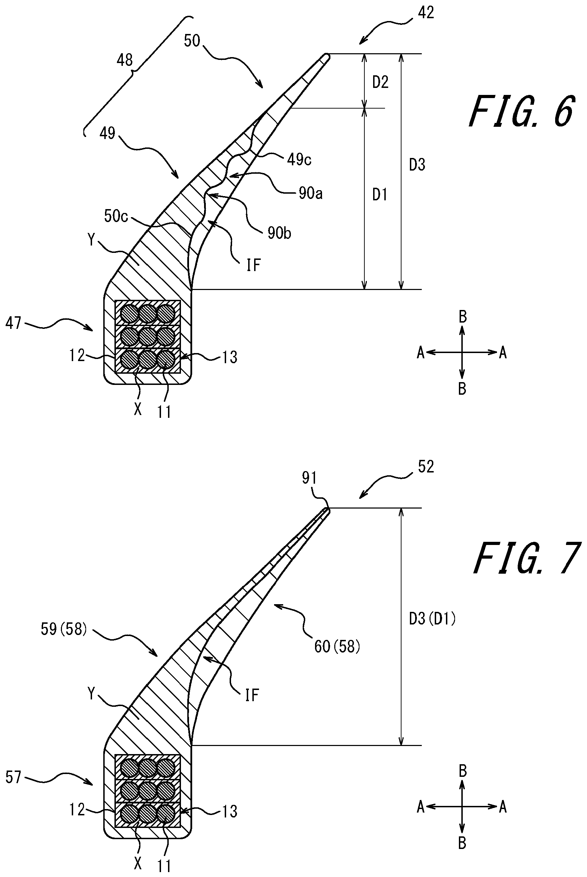

Next, description will be made as to a bead member 42 as a further embodiment with reference to FIG. 6. FIG. 6 illustrates a bead core axial cross section of the bead member 42.

The bead member 42 illustrated in FIG. 6 comprises a bead core 47 and a bead filler 48. The bead filler 48 comprises a resin filler portion 49 and a rubber filler portion 50. The bead member 42 of the present embodiment is different in configuration of a joining interface IF from the bead member 32 described above and illustrated in FIG. 5, but another configuration is the same as the configuration of the bead member 32 illustrated in FIG. 5. Consequently, the above difference is mainly described here, and description of a common configuration is omitted.

As illustrated in FIG. 6, unevenness is provided in the joining interface IF between the resin filler portion 49 and the rubber filler portion 50. Specifically, at least one convex portion 90a or concave portion 90b is formed in a joining surface 49c of the resin filler portion 49 to which the rubber filler portion 50 is joined. More specifically, a plurality of convex portions 90a and a plurality of concave portions 90b formed among the plurality of convex portions 90a are formed in the joining surface 49c illustrated in FIG. 6. An opposite joining surface 50c of the rubber filler portion 50 comes along the unevenness in contact closely with the joining surface 49c, and is bonded to the joining surface 49c with an adhesive or by vulcanization. Thus, the at least one convex portion 90a or concave portion 90b is provided in the joining surface 49c, so that a joining strength in the joining interface IF can be heightened.

### <Fifth Embodiment>

Next, description will be made as to a bead member 52 as a further embodiment with reference to FIG. 7. FIG. 7 illustrates a bead core axial cross section of the bead member 52.

The bead member 52 illustrated in FIG. 7 comprises a bead core 57 and a bead filler 58. The bead filler 58 comprises a resin filler portion 59 and a rubber filler portion 60. The bead member 52 of the present embodiment is different in configuration of a joining interface IF from the bead member 32 described above and illustrated in FIG. 5, but another configuration is the same as the configuration of the bead member 32 illustrated in FIG. 5. Consequently, the above difference is mainly described here, and description of a common configuration is omitted.

As illustrated in FIG. 7, the joining interface IF between the resin filler portion 59 and the rubber filler portion 60 extends to a roof portion 91 that is continuous in a circumferential direction as a tip of the bead filler 58 in a radial direction B. In other words, in the present embodiment, an overlapping region D1 extends to the tip of the bead filler 58 on an outer side in the radial direction B. According to this configuration, a portion only comprising the rubber filler portion 60 on the outer side of the bead filler 58 in the radial direction B is not present, and hence, a balance in rigidity can improve. Furthermore, the overlapping region D1 of the present embodiment extends to a base of the bead filler 58 on an inner side in the radial direction B. Therefore, in the radial direction B, the bead filler 58 of the present embodiment only comprises the overlapping region D1 where the resin filler portion 59 and the rubber filler portion 60 overlap in an axial direction A.

Furthermore, in the present embodiment, the resin filler portion 59 extends to the tip of the bead filler 58 on the outer side in the radial direction B. A width of the tip of the bead filler 58 in the axial direction A on the outer side in the radial direction B is small. Consequently, a width of a tip of the resin filler portion 59 in the axial direction A on the outer side in the radial direction B is also very small. Therefore, even if the resin filler portion 59 is disposed up to the tip of the bead filler 58 on the outer side in the radial direction B, a tip portion of the bead filler 58 which is easily elastically deformable and has a high flexibility can be achieved.

Note that the width of the resin filler portion 59 of the present embodiment in the axial direction A monotonously decreases to the tip on the outer side in the radial direction B, but the width of the resin filler portion 59 in the axial direction A is not limited to such a monotonously decreasing configuration as described in the present embodiment, and may have another configuration where the width in the axial direction A gradually decreases as being toward the outer side in the radial direction B. The resin filler portion may be, for example, a resin filler portion comprising a tapered portion having a width in the axial direction A that monotonously decreases as being toward the outer side in the radial direction B, and an equal width portion being continuous with this tapered portion on the outer side in the radial direction B and having a uniform width in the axial direction A to the tip on the outer side in the radial direction B irrespective of a position in the radial direction B. However, from a viewpoint of decreasing a difference in level of rigidity as described above, a configuration is preferable where the width of the resin filler portion 59 in the axial direction A monotonously decreases as being toward the outer side in the radial direction B. Note that the configuration where the width of the resin filler portion in the axial direction A monotonously decreases as being toward the outer side in the radial direction B is similarly preferable also in the above described first to fourth embodiments.

### <Sixth Embodiment>

Next, description will be made as to a bead member 62 as a further embodiment with reference to FIG. 8. FIG. 8 illustrates a bead core axial cross section of the bead member 62.

The bead member 62 illustrated in FIG. 8 comprises a bead core 67 and a bead filler 68. The bead filler 68 comprises a resin filler portion 69 and a rubber filler portion 70. The bead member 62 of the present embodiment is also different in configuration of the bead filler from each of the bead members described above and illustrated in FIG. 1 to FIG. 7, but a configuration of the bead core is similar to the bead members illustrated in FIG. 1 to FIG. 7. Consequently, the above difference is mainly described here, and description of a common configuration is omitted.

As illustrated in FIG. 8, the resin filler portion 69 of the present embodiment is entirely covered with the rubber filler portion 70. Consequently, a flexibility can be heightened stepwisely from the resin filler portion 69 as a core material of the bead filler 68 toward each of both sides in an axial direction A and an outer side in a radial direction B, and a balance in rigidity can improve. Hereinafter, details of the bead filler 68 will be described.

The bead core 67 of the present embodiment is coated with a core coating resin Y. Furthermore, in the present embodiment, the resin filler portion 69 of the bead filler 68 is formed integrally with the core coating resin Y that coats the bead core 67. The resin filler portion 69 has a configuration where a width in the axial direction A gradually decreases as being toward the outer side in the radial direction B, but may have a configuration where the width is uniform irrespective of a position in the radial direction B. However, from a viewpoint of decreasing a difference in level of rigidity, the width of the resin filler portion 69 in the axial direction A preferably gradually decreases, more preferably monotonously decreases as being toward the outer side in the radial direction B.

Here, the width of the resin filler portion 69 in the axial direction A at each position in the radial direction B is smaller than a maximum width W1 of the bead core 67 in the axial direction A. Furthermore, the resin filler portion 69 is integrally formed to protrude from an almost central position of the bead core 67 in the axial direction A to the outer side in the radial direction B. More specifically, the bead core 67 has an almost rectangular cross section outer shape comprising long sides extending in the radial direction B on both the sides in the axial direction A, and short sides extending in the axial direction A on an inner side and the outer side in the radial direction B in bead core axial cross-sectional view (see FIG. 8). Additionally, in the same cross-sectional view, the resin filler portion 69 is formed integrally with the bead core 67 using the core coating resin Y, to protrude from an almost central position of the short side in the axial direction A which is located on an outer side of the bead core 67 in the radial direction B toward the outer side in the radial direction B.

The resin filler portion 69 is inclined to extend in the axial direction A to one side (a right side in FIG. 8) that is an outer side in a tire width direction as being toward the outer side in the radial direction B.

Furthermore, the resin filler portion 69 is covered with the rubber filler portion 70 on both sides in the axial direction A and the outer side in the radial direction B. Therefore, an overlapping region D1 in the present embodiment is a region where the resin filler portion 69 is located in the radial direction B. Furthermore, a non-overlapping region D2 of the present embodiment is a region on an outer side of the resin filler portion 69 in the radial direction B. In other words, in the present embodiment, both the sides of the resin filler portion 69 in the axial direction A are covered with the rubber filler portion 70 in the overlapping region D1. Thus, the overlapping region D1 is provided, so that a difference in level of rigidity between the resin filler portion 69 and the rubber filler portion 70 can be decreased in the same manner as in the above described separate respective embodiments. Furthermore, in the present embodiment, both the sides of the resin filler portion 69 in the axial direction A are held by the rubber filler portion 70. Thus, the resin filler portion 69 and the rubber filler portion 70 are provided, so that a steering stability is compatible with a ride comfort performance. Additionally, flexibilities of both side surfaces of the bead filler 68 in the axial direction A can improve. Consequently, it is possible to acquire the bead member 62 having improved followability and improvable adhesiveness to a surrounding member in addition to the improved steering stability and ride comfort performance.

More specifically, the rubber filler portion 70 of the present embodiment comprises a first side piece portion 70a located on one side (a left side in FIG. 8) in the axial direction A which is an inner side of the resin filler portion 69 in the tire width direction. Furthermore, the rubber filler portion 70 of the present embodiment comprises a second side piece portion 70b located on the other side (the right side in FIG. 8) in the axial direction A which is an outer side of the resin filler portion 69 in the tire width direction. Additionally, the rubber filler portion 70 of the present embodiment comprises a tip portion 70c located on an outer side (an upper side in FIG. 8) of the resin filler portion 69 in the radial direction B.

The first side piece portion 70a comprises a bonding surface 70a1 bonded and joined to the resin filler portion 69 with an adhesive or by vulcanization, an inner exposed surface 70a2 located on a side opposite to the bonding surface 70a1 in the axial direction A and forming an outer surface of the bead filler 68 on the inner side in the tire width direction, and a core joining end face 70a3 on the inner side in the radial direction B. The inner exposed surface 70a2 is almost flush and continuous with a side surface of the bead core 67 on one side (the left side in FIG. 8) in the axial direction A. Consequently, in bead core axial cross-sectional view (see FIG. 8), one corner portion of the bead core 67, having a rectangular cross section outer shape, on the outer side in the radial direction B does not protrude. Therefore, damage to a surrounding wound carcass 3 (see FIG. 1 or the like) caused by the bead core 67 or the like can be inhibited. Note that the first side piece portion 70a may cover the one corner portion of the bead core 67 on the outer side in the radial direction B. Furthermore, the core joining end face 70a3 is bonded to the bead core 67 with an adhesive or by vulcanization.

The second side piece portion 70b comprises a bonding surface 70b1 bonded and joined to the resin filler portion 69 with an adhesive or by vulcanization, an outer exposed surface 70b2 located on a side opposite to the bonding surface 70b1 in the axial direction A and forming an outer surface of the bead filler 68 on the outer side in the tire width direction, and a core joining end face 70b3 on the inner side in the radial direction B. The outer exposed surface 70b2 is almost flush and continuous with a side surface of the bead core 67 on the other side (the right side in FIG. 8) in the axial direction A. Consequently, in the bead core axial cross-sectional view (see FIG. 8), the one corner portion of the bead core 67, having the rectangular cross section outer shape, on the outer side in the radial direction B does not protrude. Therefore, the damage to the surrounding wound carcass 3 (see FIG. 1, etc.) caused by the bead core 67 or the like can be inhibited. Note that the second side piece portion 70b may cover the one corner portion of the bead core 67 on the outer side in the radial direction B. Furthermore, the core joining end face 70b3 is bonded to the bead core 67 with an adhesive or by vulcanization.

Note that in the present embodiment, both a width of the first side piece portion 70a in the axial direction A and a width of the second side piece portion 70b in the axial direction A gradually decrease, more specifically monotonously decrease as being toward the outer side in the radial direction B. Furthermore, as described above, a width of the resin filler portion 69 in the axial direction A also gradually decreases as being toward the outer side in the radial direction B. Thus, an entire width of the bead filler 68 in the axial direction A gradually decreases as being toward the outer side in the radial direction B, but each of the widths of the first side piece portion 70a, the second side piece portion 70b and the resin filler portion 69 in the axial direction A also gradually decreases. Consequently, in the overlapping region D1 of the present embodiment, irrespective of a position in the radial direction B, a ratio of the width of each of the first side piece portion 70a, the second side piece portion 70b and the resin filler portion 69 in the axial direction A to the entire width of the bead filler 68 in the axial direction A is almost constant, and the bead filler 68 having a high balance in rigidity is obtainable. Note that from a viewpoint of the rigidity balance, it is preferable that the resin filler portion 69 having the width in the axial direction A that gradually decreases as being toward the outer side in the radial direction B extends to a tip of the bead filler 68 on the outer side in the radial direction B or a vicinity of the tip.

### <Seventh Embodiment>

A bead member 72 illustrated in FIG. 9 comprises a bead core 77 and a bead filler 78. The bead filler 78 comprises a resin filler portion 79 and a rubber filler portion 80. The bead member 72 of the present embodiment is different in configuration of a joining interface IF from the bead member 22 described above and illustrated in FIG. 4, but another configuration is the same as the configuration of the bead member 22 illustrated in FIG. 4. Consequently, the above difference is mainly described here, and description of a common configuration is omitted.

As illustrated in FIG. 9, the joining interface IF between the resin filler portion 79 and the rubber filler portion 80 is different in inclining direction from the joining interface IF illustrated in FIG. 4. Specifically, in the present embodiment illustrated in FIG. 9, an outer end that is an end of an outside of the joining interface IF in a radial direction B comprises an outer end 29b1 of a second curved surface 29b. Furthermore, in the present embodiment illustrated in FIG. 9, an inner end that is an end of an inside of the joining interface IF in the radial direction B comprises an outer end 29a1 of a first curved surface 29a. That is, in the present embodiment, the outer end 29b1 of the second curved surface 29b which forms the outer end as the end of the outside of the joining interface IF in the radial direction B is located on one side (a right side in FIG. 9) in an axial direction A which is an outer side of the outer end 29a1 of the first curved surface 29a in a tire width direction, the outer end of the first curved surface forming the inner end that is the end of the inside of the joining interface IF in the radial direction B. According to this configuration, even if a vertical load acts on a tire comprising the bead member 72, the load is easily received by a joining surface of the resin filler portion 79 forming the joining interface IF having the inclining direction compared with that of the joining interface IF illustrated in FIG. 4. A shearing force is hard to be applied to a direction along the joining interface IF between the resin filler portion 79 and the rubber filler portion 80. As a result, the resin filler portion 79 and the rubber filler portion 80 can be inhibited from peeling from the joining interface IF, and a joining durability of the joining interface IF between the resin filler portion 79 and the rubber filler portion 80 can improve.

### INDUSTRIAL APPLICABILITY

The present invention relates to a bead member and a pneumatic tire.

### REFERENCE SIGNS LIST

- 1: pneumatic tire
- 1a: tread portion
- 1b: sidewall portion
- 1c: bead portion
- 2: bead member
- 3: carcass
- 4: belt
- 4a: first belt layer
- 4b: second belt layer
- 5: band
- 5a: band layer
- 6: coating rubber
- 6a: tread rubber
- 6b: side rubber
- 7: bead core
- 8: bead filler
- 8a: core joining surface
- 9: resin filler portion
- 9a: first curved surface
- 9a1: outer end
- 9b: second curved surface
- 9b1: outer end
- 9c: joining surface
- 10: rubber filler portion
- 10a: first side surface
- 10a1: inner end
- 10b: second side surface
- 10b1: inner end
- 10c: opposite joining surface
- 11: bead wire
- 12: strip member
- 13: annular body
- 14: roof portion
- 22, 32, 42, 52, 62 and 72: bead member
- 27, 37, 47, 57, 67 and 77: bead core
- 28, 38, 48, 58, 68 and 78: bead filler
- 29, 39, 49, 59, 69 and 79: resin filler portion
- 29a: first curved surface
- 29a1: outer end
- 29b: second curved surface
- 29b1: outer end
- 30, 40, 50, 60, 70 and 80 rubber: filler portion
- 49c: joining surface
- 50c: opposite joining surface
- 70a: first side piece portion
- 70a1: bonding surface
- 70a2: inner exposed surface
- 70a3: core joining end face
- 70b: second side piece portion
- 70b1: bonding surface
- 70b2: outer exposed surface
- 70b3: core joining end face
- 70c: tip portion
- 90a: convex portion
- 90b: concave portion
- 91: roof portion
- A: tire axial direction or an axial direction of the bead core
- B: tire radial direction or a radial direction of the bead core
- CL: tire equatorial plane
- D1: overlapping region of the bead filler in the radial direction
- D2: non-overlapping region of the bead filler in the radial direction
- D3: entire region of the bead filler in the radial direction
- IF: joining interface
- W1: maximum width of the bead core in the axial direction
- X: wire coating resin
- Y: core coating resin

## Claims

1. A bead member (22, 32, 42, 52, 62, 72) for a pneumatic tire, the bead member comprising:
an annular bead core, and
a bead filler ( 28, 38, 48, 58, 68, 78) located on an outer side of the bead core ( 27, 37, 47, 57, 67, 77) in a radial direction of the bead core, wherein the bead filler comprises a resin filler portion ( 29, 39, 49, 59, 69, 79) made of a resin and a rubber filler portion ( 30, 40, 50, 60, 70, 80) made of a rubber and joined to the resin filler portion **characterized in that**, the bead core is coated with a core coating resin (Y), and
the resin filler portion is formed integrally with the core coating resin.

2. The bead member according to claim 1, wherein the bead core comprises an annular body (13) in a state where a strip member (12) formed by coating one or more bead wires (11) with a wire coating resin (X) is wound a plurality of times and laminated, and
a circumference of the annular body is coated with the core coating resin.

3. The bead member according to claim 2, wherein the annular body has a state where the strip member is laminated in at least one of the radial direction (B) of the bead core and an axial direction (A) of the bead core.

4. The bead member according to any one of claims 1 to 3, wherein there is an overlapping region in the radial direction of the bead core where the resin filler portion and the rubber filler portion overlap in the axial direction of the bead core.

5. The bead member according to claim 4, wherein the overlapping region extends up to a tip (70c) of the bead filler.

6. The bead member according to claim 4 or 5, wherein in the overlapping region, the resin filler portion is exposed on one side in the axial direction of the bead core, and the rubber filler portion is exposed on the other side in the axial direction of the bead core.

7. The bead member according to claim 4 or 5, wherein in the overlapping region, both sides of the resin filler portion in the axial direction of the bead core are covered with the rubber filler portion.

8. The bead member according to any one of claims 1 to 7, wherein at least one convex portion (90a) or concave portion (90b) is formed in a joining surface (49c) of the resin filler portion to which the rubber filler portion is joined.

9. The bead member according to any one of claims 1 to 7, wherein a width of the resin filler portion in the axial direction of the bead core gradually decreases as being toward the outer side in the radial direction of the bead core.

10. A pneumatic tire (1) comprising:
the bead member according to any one of claims 1 to 9, and
a carcass (3) turned up to wrap around the bead member.

## Patentansprüche

1. Wulstelement (22, 32, 42, 52, 62, 72) für einen Luftreifen, wobei das Wulstelement Folgendes umfasst:
einen ringförmigen Wulstkern, und
einen Kernreiter (28, 38, 48, 58, 68, 78), der sich auf einer äußeren Seite des Wulstkerns (27, 37, 47, 57, 67, 77) in einer Radialrichtung des Wulstkerns befindet, wobei der Kernreiter einen Harzfüllerabschnitt (29, 39, 49, 59, 69, 79), der aus einem Harz hergestellt ist, und einen Kautschukfüllerabschnitt (30, 40, 50, 60, 70, 80), der aus einem Kautschuk hergestellt und mit dem Harzfüllerabschnitt verbunden ist, umfasst, **dadurch gekennzeichnet, dass**
der Wulstkern mit einem Kernüberzugsharz (Y) überzogen ist, und
der Harzfüllerabschnitt einstückig mit dem Kernüberzugsharz geformt ist.

2. Wulstelement nach Anspruch 1, wobei der Wulstkern einen ringförmigen Körper (13) in einem Zustand umfasst, in dem ein Streifenelement (12), das durch Überziehen eines oder mehrerer Wulstdrähte (11) mit einem Drahtüberzugsharz (X) geformt ist, eine Vielzahl an Malen gewickelt und laminiert ist, und
ein Umfang des ringförmigen Körpers mit dem Kernüberzugsharz überzogen ist.

3. Wulstelement nach Anspruch 2, wobei der ringförmige Körper einen Zustand aufweist, in dem das Streifenelement in mindestens einer von der Radialrichtung (B) des Wulstkerns und einer Axialrichtung (A) des Wulstkerns laminiert ist.

4. Wulstelement nach einem der Ansprüche 1 bis 3, wobei es einen Überlappungsbereich in der Radialrichtung des Wulstkerns gibt, wo sich der Harzfüllerabschnitt und der Kautschukfüllerabschnitt in der Axialrichtung des Wulstkerns überlappen.

5. Wulstelement nach Anspruch 4, wobei sich der Überlappungsbereich bis zu einer Spitze (70c) des Kernreiters erstreckt.

6. Wulstelement nach Anspruch 4 oder 5, wobei in dem Überlappungsbereich der Harzfüllerabschnitt auf einer Seite in der Axialrichtung des Wulstkerns freigelegt ist, und der Kautschukfüllerabschnitt auf der anderen Seite in der Axialrichtung des Wulstkerns freigelegt ist.

7. Wulstelement nach Anspruch 4 oder 5, wobei in dem Überlappungsbereich beide Seiten des Harzfüllerabschnitts in der Axialrichtung des Wulstkerns mit dem Kautschukfüllerabschnitt bedeckt sind.

8. Wulstelement nach einem der Ansprüche 1 bis 7, wobei mindestens ein konvexer Abschnitt (90a) oder konkaver Abschnitt (90b) in einer Verbindungsfläche (49c) des Harzfüllerabschnitts geformt ist, womit der Kautschukfüllerabschnitt verbunden ist.

9. Wulstelement nach einem der Ansprüche 1 bis 7, wobei eine Breite des Harzfüllerabschnitts in der Axialrichtung des Wulstkerns zu der äußeren Seite in der Radialrichtung des Wulstkerns hin allmählich abnimmt.

10. Luftreifen (1), der Folgendes umfasst:
das Wulstelement nach einem der Ansprüche 1 bis 9, und
eine Karkasse (3), die umgeschlagen ist, um sich um das Wulstelement zu wickeln.

## Revendications

1. Elément de talon (22, 32, 42, 52, 62, 72) pour un bandage pneumatique, l'élément de talon comprenant :
une tringle annulaire ; et
un bourrage sur tringle (28, 38, 48, 58, 68, 78) situé sur un côté externe de la tringle (27, 37, 47, 57, 67, 77), dans une direction radiale de la tringle, dans lequel le bourrage sur tringle comprend une partie de remplissage de résine (29, 39, 49, 59, 69, 79) fabriquée d'une résine et une partie de remplissage de caoutchouc (30, 40, 50, 60, 70, 80) fabriquée d'un caoutchouc et reliée à la partie de remplissage de résine, **caractérisé en ce que** :
la tringle est revêtue d'une résine de revêtement de tringle (Y) ; et
la partie de remplissage de résine est formée d'une seule pièce avec la résine de revêtement de tringle.

2. Elément de talon selon la revendication 1, dans lequel la tringle comprend un corps annulaire (13) dans un état dans lequel un élément de bande (12), formé en revêtant un ou plusieurs fils de tringle (11) d'une résine de revêtement de fils (X), est enroulé à une pluralité de reprises et stratifié ; et
une circonférence du corps annulaire est revêtue de la résine de revêtement de tringle.

3. Elément de talon selon la revendication 2, dans lequel le corps annulaire a un état dans lequel l'élément de bande est stratifié dans au moins une de la direction radiale (B) de la tringle et d'une direction axiale (A) de la tringle.

4. Elément de talon selon l'une quelconque des revendications 1 à 3, dans lequel il y a une région à chevauchement dans la direction radiale de la tringle, où la partie de remplissage de résine et la partie de remplissage de caoutchouc se chevauchent dans la direction axiale de la tringle.

5. Elément de talon selon la revendication 4, dans lequel la région à chevauchement s'étend jusqu'à une pointe (70c) du bourrage sur tringle.

6. Elément de talon selon la revendication 4 ou 5, dans lequel, dans la région à chevauchement, la partie de remplissage de résine est exposée sur un côté dans la direction axiale de la tringle, et la partie de remplissage de caoutchouc est exposée sur l'autre côté dans la direction axiale de la tringle.

7. Elément de talon selon la revendication 4 ou 5, dans lequel, dans la région à chevauchement, les deux côtés de la partie de remplissage de résine, dans la direction axiale de la tringle, sont recouverts par la partie de remplissage de caoutchouc.

8. Elément de talon selon l'une quelconque des revendications 1 à 7, dans lequel au moins une partie convexe (90a) ou une partie concave (90b) est formée dans une surface de liaison (49c) de la partie de remplissage de résine à laquelle la partie de remplissage de caoutchouc est reliée.

9. Elément de talon selon l'une quelconque des revendications 1 à 7, dans lequel une largeur de la partie de remplissage de résine, dans la direction axiale de la tringle, diminue progressivement en allant vers le côté externe, dans la direction radiale de la tringle.

10. Bandage pneumatique (1), comprenant :
l'élément de talon selon l'une quelconque des revendications 1 à 9 ; et
une carcasse (3) retournée pour s'enrouler autour de l'élément de talon.
